# EUROPEAN PATENT APPLICATION

(11) **EP 1 341 356 A2**
(43) Date of publication of application: **03.09.2003**
(21) Application number: 03001208.2
(22) Date of filing: 17.01.2003
(51) Int. Cl.: H04L 29/06, H04N 7/173

(54) **Two-way video gateway and method for establishing an audio and video communications link between dissimilar multimedia terminals**

(30) Priority: 25.02.2002 US 82394
(71) Applicant: ALCATEL, 75008 Paris (FR)
(72) Inventor: Bartz, Stephen P., Sachse, Texas 75048 (US); Tinney, John M., Dallas, Texas 75230 (US)
(74) Representative: Dreiss, Fuhlendorf, Steimle & Becker

(57) **Abstract**

A two-way video gateway and method capable of effectively enabling a multimedia communications link between dissimilar multimedia terminals are described. The two-way video gateway includes a controller that enables a multimedia communications link between dissimilar multimedia terminals by decoding multimedia communications received from one of the multimedia terminals that are in a protocol and coding format used by that multimedia terminal and reformatting the decoded multimedia communications into a protocol and coding format used by the other multimedia terminal and then forwarding the reformatted multimedia communications to the other multimedia terminal. Basically, the two-way video gateway enables dissimilar multimedia terminals to transmit and receive multimedia communications to and from one another while each multimedia terminal is able to operate in a protocol and coding format optimized for their individual capabilities without taking into account the protocol and coding format used by the other multimedia terminal.

## Description

### BACKGROUND OF THE INVENTION

### Field of the Invention

The present invention relates in general to the communications field and, in particular, to a two-way video gateway and method capable of enabling an audio and video communications link between dissimilar multimedia terminals.

### Description of Related Art

Today multimedia terminals such as video mobile phones, personal computers, video conference equipment... can transmit and receive multimedia communications between one another only if they communicate to one another using the same protocol and the same audio and video coding standard. As such, a person using a personal computer is not likely going to be able to establish a multimedia communications link with a group of people using video teleconference equipment because the personal computer and video conference equipment are not the same type of multimedia terminals and as such they are not likely to use the same protocols and the same audio and video coding formats. Of course, it would be desirable to be able to establish multimedia communications link between different types of multimedia terminals or dissimilar multimedia terminals. This need to be able to establish a multimedia communications link between dissimilar multimedia terminals has become increasingly important with the introduction of the relatively new video mobile phone into the market place. However, today there is no efficient way to establish a multimedia communications link between dissimilar multimedia terminals such as a video mobile phone and video conference equipment.

One possible solution for enabling a multimedia communications link between dissimilar multimedia terminals involves storing a large number of protocols and a large number of audio and video coding formats in each multimedia terminal so there is likely to be a common protocol and a common coding format between the multimedia terminals. Unfortunately, this solution if adopted would be very costly and difficult to implement with existing and new multimedia terminals because each multimedia terminal would have to store a large number of protocols (e.g., H.320, H.323, H.324, H.324M) and also store a large number of audio and video coding formats (e.g., MPEG-4, H.261, H.263, G.711, G.723, G.729). Moreover, this solution would be difficult if not impossible to implement in existing and new multimedia terminals because new protocols and new audio and video coding formats are going to be developed in the future along with new multimedia terminals. Thus, the new multimedia terminals would not be able to communicate with the older multimedia terminals unless the older multimedia terminals had stored therein the new protocols and the new audio and video coding formats. In addition, this solution would not work well with video mobile phones because if they support a large number of protocols and video and coding formats that would have the undesirable effect of increasing the power consumption of the video mobile phones. Accordingly, there is a need for a device and method that can enable a multimedia communications link between dissimilar multimedia terminals without the aforementioned drawbacks associated with having to store a large number of protocols and a large number of audio and video coding formats in each multimedia terminal. This need and other needs are addressed by the two-way video gateway and method of the present invention.

### BRIEF DESCRIPTION OF THE INVENTION

The present invention includes a two-way video gateway and method that are capable of effectively enabling a multimedia communications link between dissimilar multimedia terminals. The two-way video gateway includes a controller that enables a multimedia communications link between dissimilar multimedia terminals by decoding multimedia communications received from one of the multimedia terminals that are in a protocol and coding format used by that multimedia terminal and reformatting the decoded multimedia communications into a protocol and coding format used by the other multimedia terminal and then forwarding the reformatted multimedia communications to the other multimedia terminal. Basically, the two-way video gateway enables dissimilar multimedia terminals to transmit and receive multimedia communications to and from one another while each multimedia terminal is able to operate in a protocol and coding format optimized for their individual capabilities without taking into account the protocol and coding format used by the other multimedia terminal.

### BRIEF DESCRIPTION OF THE DRAWINGS

A more complete understanding of the present invention may be had by reference to the following detailed description when taken in conjunction with the accompanying drawings wherein:
FIGURE 1 is a block diagram of a communications network interacting with a two-way video gateway in accordance with the present invention;
FIGURE 2 is a block diagram illustrating in greater detail the components of the two-way video gateway which is shown to be connected to a wireless communications network;
FIGURE 3 is a block diagram illustrating in greater detail an exemplary software architecture of a call establishment element in the two-way video gateway of FIGURES 1 and 2;
FIGURE 4 is a block diagram illustrating in greater detail an exemplary software architecture of a connection control element and a signal processing element in the two-way video gateway of FIGURES 1 and 2;
FIGURES 5A and 5B are block diagrams illustrating how the wireless communications network of FIGURE 2 can maintain a multimedia communications link between a roaming video mobile phone and another multimedia terminal; and
FIGURE 6 is a flowchart illustrating the basic steps of a preferred method for enabling a multimedia communications link between dissimilar multimedia terminals in accordance with the present invention.

### DETAILED DESCRIPTION OF THE DRAWINGS

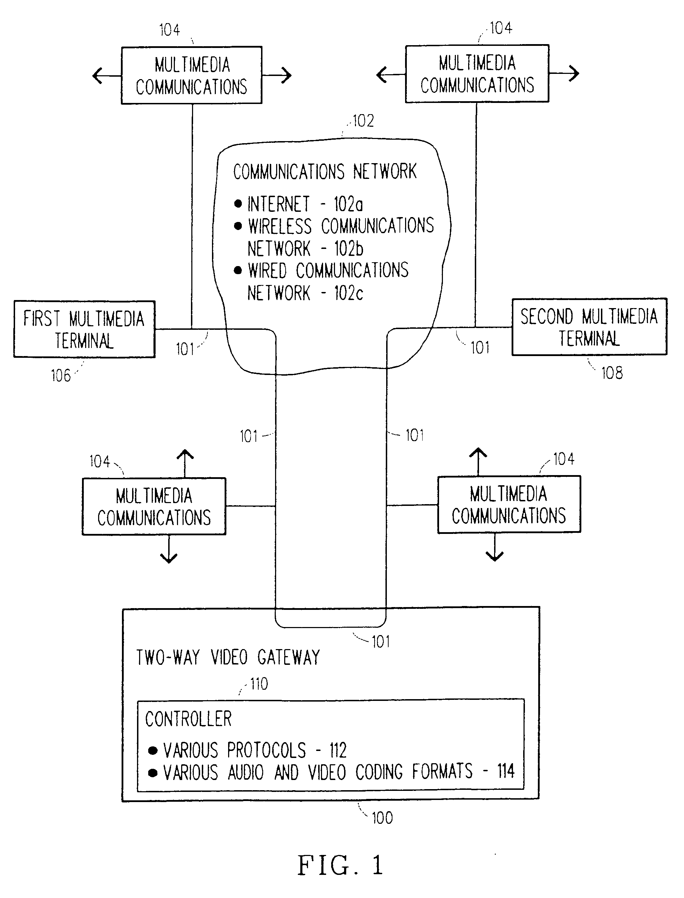

Referring to FIGURES 1-6, there are illustrated in accordance with the present invention a preferred embodiment of a two-way video gateway 100 and a preferred method 600 for enabling an audio and video communications link between dissimilar multimedia terminals. A multimedia terminal can be a video mobile phone, a video land-based phone, a personal computer, video conference equipment or any electronic device capable of handling multimedia communications.

Referring to FIGURE 1, there is illustrated a block diagram of the two-way video gateway 100 interacting with a communications network 102. As illustrated, the communications network 102 can be an Internet 102a, a wireless communications network 102b and/or a wired communications network 102c. Certain details associated with the Internet 102a, the wireless communications networks 102b and the wired communications network 102c are known in the industry. Therefore, for clarity, the descriptions provided below in relation to the Internet 102a, the wireless communications networks 102b and the wired communications network 102c omits the components not necessary to understand the present invention.

The two-way video gateway 100 connects to the communications network 102 in a manner that enables an audio and video communications link 101 between dissimilar multimedia terminals 106 and 108. Basically, the two-way video gateway 100 stores a large number of protocols 112 and a large number of coding formats 114 (e.g., audio and video coding formats 114) that are used to convert the protocol and coding format of multimedia communications 104 received from one of the multimedia terminals 106 or 108 into another protocol and coding format so that the converted multimedia communications 104 can be received by the other multimedia terminal 108 or 106. In this way, the two-way video gateway 100 enables dissimilar multimedia terminals 106 and 108 to transmit and receive multimedia communications 104 to and from one another while each multimedia terminal 106 and 108 is able to operate in a protocol and coding format that is optimized for their individual capabilities without taking into account the protocol and coding format used by the other multimedia terminal.

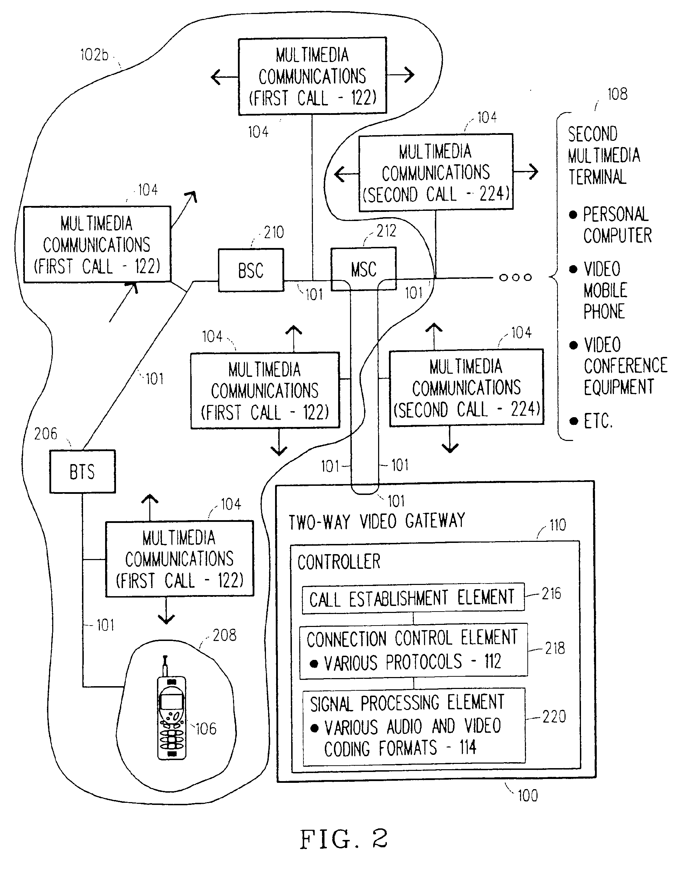

In particular, the two-way video gateway 100 includes a controller 110 capable of enabling the multimedia communications link 101 between dissimilar multimedia terminals 106 and 108 by decoding the multimedia communications 104 received from one of the multimedia terminals 106 or 108 that are in a protocol and coding format used by that multimedia terminal 106 or 108 and reformatting the decoded multimedia communications 104 into another protocol and coding format used by the other multimedia terminal 108 or 106 and then forwarding the reformatted multimedia communications 104 to the other multimedia terminal 108 or 106. A more detailed description about the preferred embodiment of the two-way video gateway 100 is provided below with respect to FIGURES 2-4.

Referring to FIGURE 2, there is a block diagram illustrating in greater detail the components of the two-way video gateway 100 which is shown connected to a wireless communications network 102b. The wireless communications network 102b enables a person using the first multimedia terminal 106 (shown as a video mobile phone 106) to originate or receive wireless multimedia communications 104 to or from a base transceiver station (BTS) 206 that services one or more cells 208 of the wireless communications network 102b. The BTS 206 communicates with a base station controller (BSC) 210 that forwards and receives the multimedia communications 104 to and from a mobile switching center (MSC) 212. The MSC 212 routes the multimedia communications 104 to the two-way video gateway 100 and then routes the multimedia communications 104 to and from the second multimedia terminal 108. As illustrated, the MSC 212 routes the multimedia communications 104 to the two-way video gateway 100 instead of directly routing the multimedia communications 104 between the first multimedia terminal 106 and the second multimedia terminal 108. The second multimedia terminal 108 can be a video mobile phone, a video land-based phone, a personal computer, video conference equipment or any electronic device capable of handling multimedia communications.

As described above, the two-way video gateway 100 connects to the wireless communications network 102b in a manner that enables an audio and video communications link 101 between dissimilar multimedia terminals 106 and 108. Basically, the two-way video gateway 100 stores a large number of protocols 112 and a large number of coding formats 114 (e.g., audio and video coding formats 114) that are used to convert the protocol and coding format of multimedia communications 104 received from one of the multimedia terminals 106 or 108 into another protocol and coding format so that the converted multimedia communications 104 can be received by the other multimedia terminal 108 or 106. In this way, the two-way video gateway 100 enables dissimilar multimedia terminals 106 and 108 to transmit and receive multimedia communications 104 to and from one another while each multimedia terminal 106 and 108 is able to operate in a protocol and coding format that is optimized for their individual capabilities without taking into account the protocol and coding format used by the other multimedia terminal.

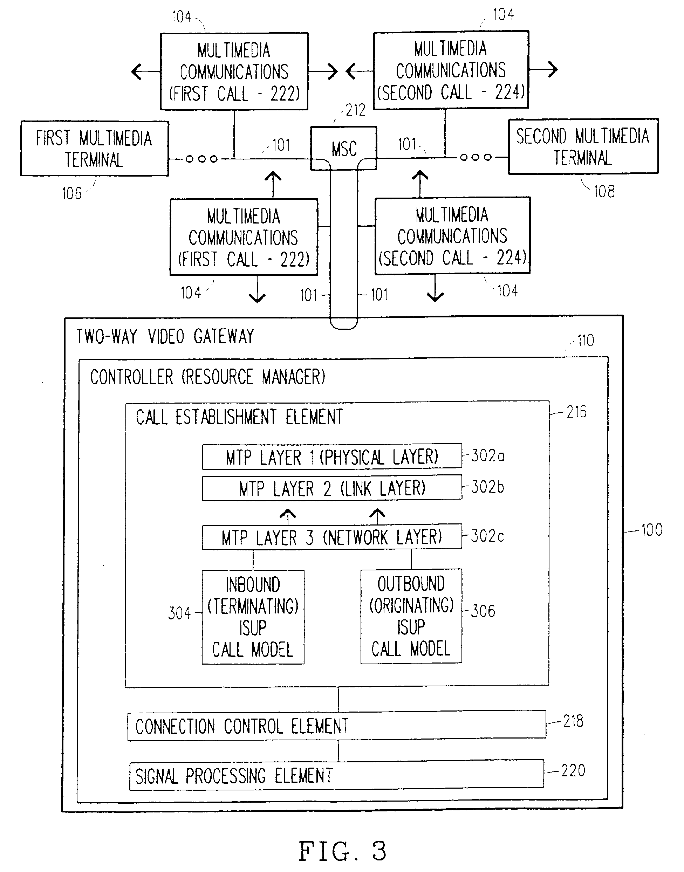

In the preferred embodiment, the two-way video gateway 100 includes the controller 110 which has three different elements including a call establishment element 216, a connection control element 218 and a signal processing element 220. A detailed description about an exemplary software architecture of the call establishment element 216 is provided below with respect to FIGURE 3.

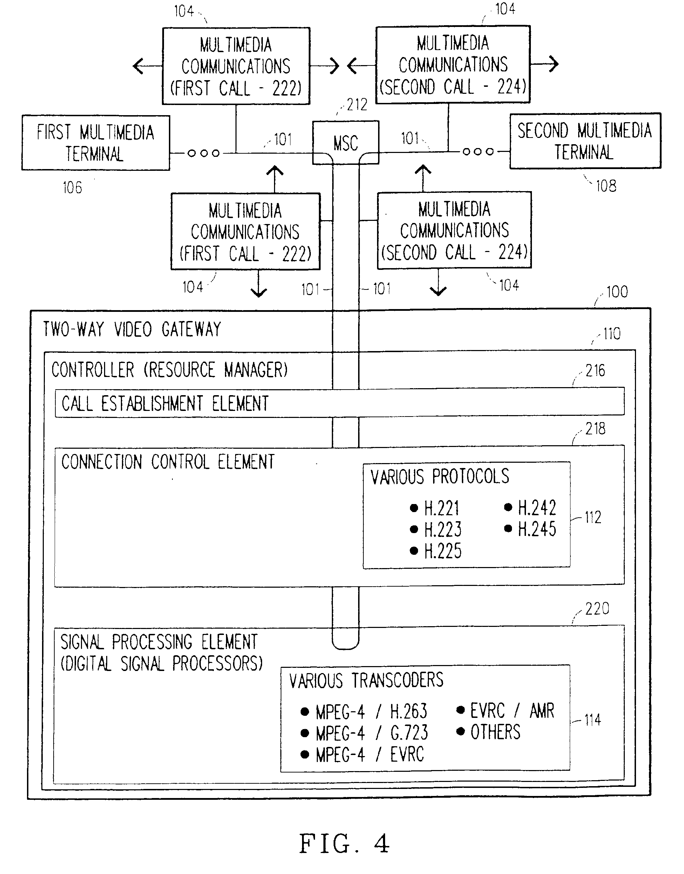

Referring to FIGURE 3, there is a block diagram illustrating in greater detail an exemplary software architecture of the call establishment element 216. The call establishment element 216 includes several message transfer part (MTP) layers 302a, 302b and 302c (three MTP layers are shown). The first MTP layer 302a (physical layer) interacts with the MSC 212 and the second MTP layer 302b (link layer). The second MTP layer 302b (link layer) interacts with the first and third MTP layers 302a and 302c (physical and network layers). The third MTP layer 302c (network layer) interacts with an inbound ISUP call model 304 and an outbound ISUP call model 306. The call models 304 and 306 interact with the controller 100 (also referred to as a resource manager). The controller 110) manages the resources of the two-way video gateway 100 including the connection control element 218 and the signal processing element 220 (see FIGURE 4). In the preferred embodiment, the first and second MTP layers 302a and 302b (physical and link layers) are located on a network interface card (NIC). While, the third MTP layer 302c (network layer), the inbound ISUP call model 304, the outbound ISUP call model 306 are located on a digital signal processor. Referring back to FIGURE 2, as an example, assume the person using the first multimedia terminal 106 (shown as video mobile phone 106) would like to establish a video conference call with the person or people using the second multimedia terminal 108 (e.g., video conference equipment 108). The person would initiate an incoming call that is received by the MSC 212 and converted into a SS7, C7 or J7 format by the MSC 212 before being forwarded to the call establishment element 216. In response to receiving the converted incoming call, the call establishment element 216 establishes a first call 222 with the first multimedia terminal 106 and then establishes a second call 224 with the second multimedia terminal 108.In particular, the call establishment element 216 functions to establish the first call 222 with the first multimedia terminal 106 which is separate from the second call 224 established with the second multimedia terminal 108. At this point, the two-way video gateway 100 and in particular the call establishment element 216 only knows that the first multimedia terminal 106 and the second multimedia terminal 108 are multimedia capable. As such, the multimedia communications link 101 which includes both the first call 222 and the second call 224 has not yet been established between the first multimedia terminal 106 and the second multimedia terminal 108.

If the two-way video gateway 100 was connected to the Internet 102a instead of the wireless communications network 102b then the incoming call would be converted by an IP gateway (not shown) into a TCP/IP format for the call establishment element 216 before the first and second calls 222 and 224 are established between the first and second multimedia terminals 106 and 108. It should be noted that the IP gateway (not shown) could be incorporated into the two-way video gateway 100. In fact, the call establishment element 216 can incorporate a wide-variety of transport protocols including, for example, SS7, Internet Protocol and ISDN.

The two-way video gateway 100 is shown in FIGURE 2 where the call establishment element 216 then interacts with the connection control element 218 which uses the first call 222 with the first multimedia terminal 106 to determine the protocol and the coding format capabilities of the first multimedia terminal 106. In a similar manner, the connection control element 218 uses the second call 224 with the second multimedia terminal 108 to determine the protocol and the coding format capabilities of the second multimedia terminal 108. For example, the connection control element 218 may determine that the first multimedia terminal 106 transmits and receives multimedia communications 104 using a protocol of H.223 and a coding format of MPEG-4. And, the connection control element 218 may determine that the second multimedia terminal 108 transmits and receives multimedia communications 104 using a protocol of H.221 and a coding format of H.263/G.723.

The connection control element 218 then assigns one or more protocols 112 and one or more audio and video coding formats 114 that are used by the signal processing element 220 (only one shown) to transcode multimedia communications 104 so that the multimedia communications link 101 can be established between the first and second multimedia terminals 106 and 108. In particular, the signal processing element 220 uses the assigned protocol(s) 112 and the assigned coding format(s) 114 to convert the multimedia communications 104 in the first call 222 received from the first multimedia terminal 106 that are in one protocol and one coding format into another protocol and another coding format so that the multimedia communications 104 can be forwarded in the second call 224 to the second multimedia terminal 108. Continuing with the earlier example, the signal processing element 220 upon receiving multimedia communications 104 from the first multimedia terminal 106 having a H.223 protocol and a MPEG-4 coding format would convert these multimedia communications 104 so that they have a H.221 protocol and a H.263/G.723 coding format that can be forwarded to and understood by the second multimedia terminal 108. Likewise, the signal processing element 220 upon receiving multimedia communications 104 from the second multimedia terminal 108 having a H.221 protocol and a H.263/G.723 coding format would convert these multimedia communications 104 so that they have a H.223 protocol and a MPEG-4 coding format that can be forwarded to and understood by the first multimedia terminal 106. A detailed description about an exemplary software architecture of the connection control element 218 and the signal processing element 220 is provided below with respect to FIGURE 4.

Referring to FIGURE 4, there is a block diagram illustrating in greater detail an exemplary software architecture of the connection control element 218 and the signal processing element 220. The controller/resource manager 110 allocates the processing and communications resources of the various hardware elements of the two-way video gateway 100 to allow for a distributed and extensible architecture. In particular, the call establishment element 216 enables the basic communications protocols (e.g., H.221, H.223, H.225, H.242, H.245) to establish a two-way, end-to-end connection to each of the multimedia terminals 106 and 108 involved in the call. These communications protocols may consist of telephony protocols such as Signaling System #7 or ISDN Basic Rate Interface, or data communications protocols such as Internet Protocol. Once the data path (first call 222) has been established, the connection control element 218 begins a dialog with the multimedia terminal 106 to determine its characteristics and capabilities. This information is used to designate the correct transcoder function 114 to be applied. The connection control element 112 is also required to perform error control and recovery for the data stream. After the control information has been stripped from the data stream (first call 222), the data packets are passed to the signal processing element 220 and in particular the designated transcoder function 114 for conversion to the appropriate outbound format. The transcoder function 114 as shown can include a wide-variety of coding formats including (for example):
- MPEG-4/H.263 transcoder
- MPEG-4/G.723 transcoder
- MPEG-4/EVRC transcoder
- EVRC/AMR transcoder
- Other transcoders

Another example of a call flow could occur as follows. The first multimedia terminal 106 would initiate a call to the second multimedia terminal 108 indicating in the setup message that multimedia capability was required. The MSC 212 would, based on the multimedia capability indication, route the call to the two-way video gateway 100 instead of directly to the second multimedia terminal 108. The call establishment element 216, after validating the destination information, would assign the desired connection for the data path (first call 222). The resource manager 110 would then assign a connection control element 218 (only one shown), and the data path would be routed to that element 218. This connection control element 218 would then employ one or more of the various protocols 112 to communicate directly over the data path (first call 222) to the first multimedia terminal 106.

At this point, the call establishment element 216 would initiate the second leg (second call 224) of the call through the MSC 212 to the second multimedia terminal 108. The same connection control element 218 now begins communicating with the second multimedia terminal 108 to determine its protocol and capabilities. Now an appropriate signal processing element 220 (only one shown) can be assigned by the resource manager 110 and the data path (first call 222 and second call 224) routed to this signal processing element 220 (e.g., digital signal processors (DSPs)). The signal processing elements 220 are assigned based on the capacity of each and the processing requirements of the different transcoding functions 114.

Now that a two-way multimedia connection (first call 222 and second call 224) has been established, the connection control element 218 will continue to monitor and control the connection for the duration of the call. In some multimedia protocols it is possible to change connection capabilities during a call. This could require de-assigning and re-assigning different signal processing elements 114 in the middle of a call. At the end of the session, the call establishment element 216 would release the circuits involved in the call and free all the resources that were involved in the call.

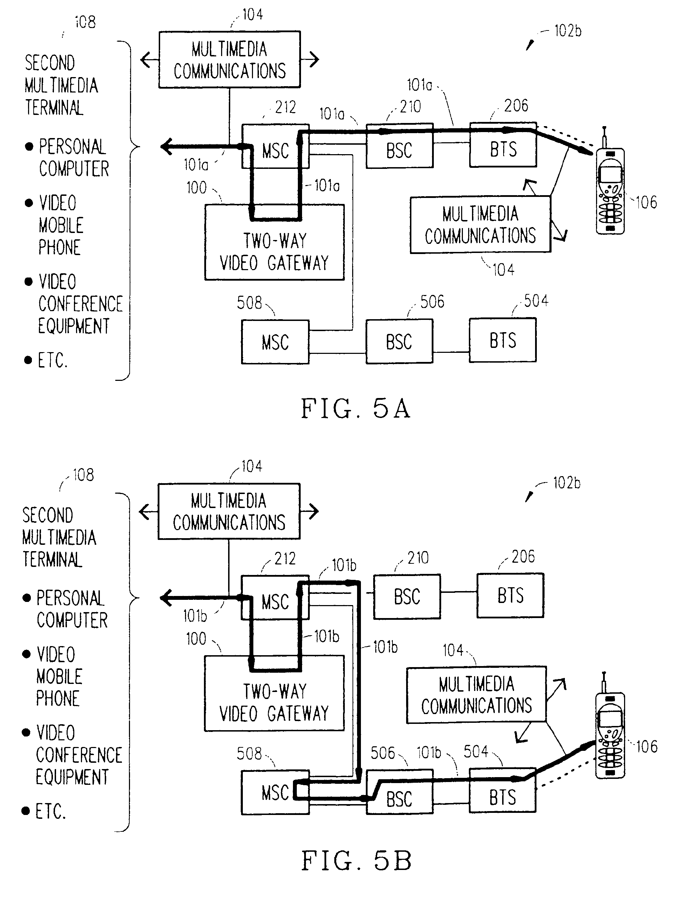

Referring to FIGURES 5A and 5B, there are two block diagrams illustrating how the wireless communications network 102d can maintain a multimedia communications link 101 between a roaming video mobile phone 106 and a stationary second multimedia terminal 108. In these drawings it is assumed that the two-way video gateway 100 has already established a multimedia communications link 101 (shown as a shaded arrow) between the dissimilar multimedia terminals 106 and 108.

Referring first to FIGURE 5A, there is a block diagram illustrating the wireless communications network 102b and the multimedia communications link 102a between the first multimedia terminal 106 (shown as a video mobile phone 106) and the second multimedia terminal 108. At this point, the first multimedia terminal 106 is located in the area that is serviced by BTS 206, BSC 210 and MSC 212 of the wireless communications network 102c. Thus, the multimedia communications link 101a as shown extends back-and-forth between the first multimedia terminal 106 and the second multimedia terminal 108 through the BTS 206, the BSC 210, the MSC 212 and the two-way video gateway 100. A detailed description about the functions and operations of the BTS 206, the BSC 210 and the MSC 212 in the wireless communications network 102b has been provided above with respect to FIGURE 2.

Referring to FIGURE 5B, there is a block diagram illustrating the wireless communications network 102b and the multimedia communications link 101b between the roaming first multimedia terminal 106 (shown as a video mobile phone 106) and the stationary second multimedia terminal 108. At this point, the first multimedia terminal 106 has moved to an area that is serviced by the BTS 504, the BSC 506 and the MSC 508. Thus, the multimedia communications link 101b as shown extends back-and-forth between the roaming first multimedia terminal 106 and the second multimedia terminal 108 through the BTS 504, the BSC 506, the MSC 508, the MSC 212 and the two-way video gateway 100. FIGURE 5B represents the same call as in FIGURE 5A after a handoff from BTS 206 to BTS 504 has occurred. It should be noted that the communications path through the two-way video gateway 100 is static throughout the duration of this mobile multimedia call. The link between MSC 212 and MSC 508 can be an IS-41 inter-machine trunk. Again, a detailed description about the functions and operations the BTS 504, the BSC 506 and the MSCs 212 and 508 in the wireless communications network 102b has been provided above with respect to FIGURE 2.

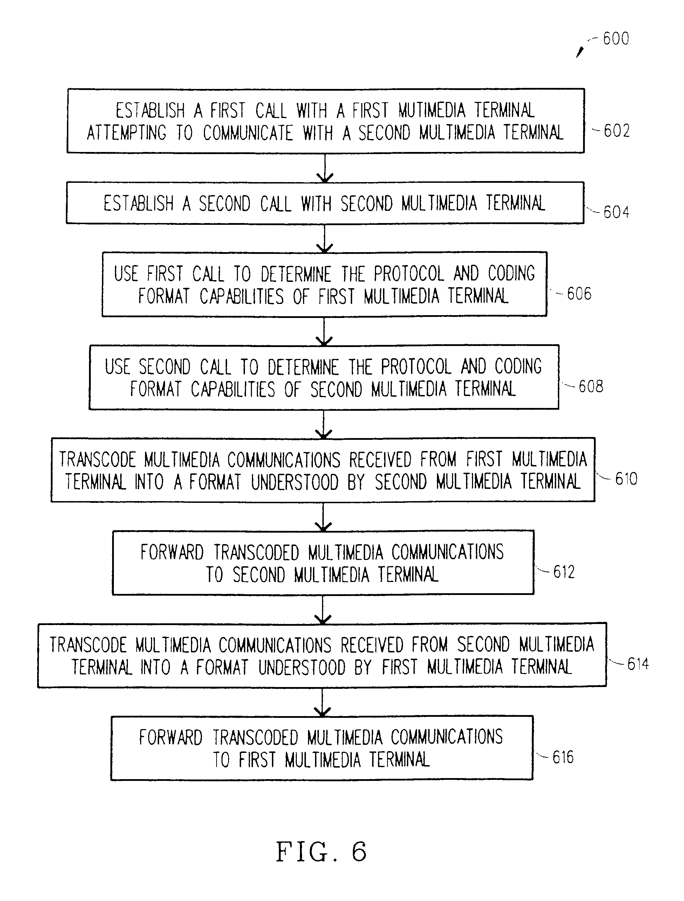

Referring to FIGURE 6, there is a flowchart illustrating the basic steps of the preferred method 600 for enabling a multimedia communications link 101 between dissimilar multimedia terminals 106 and 108. As described above, the dissimilar multimedia terminals 106 and 108 can communicate with one another through the communications network 102 and the two-way video gateway 100.

Beginning at step 602, the two-way video gateway 100 establishes a first call 222 with the first multimedia terminal 106 after the first multimedia terminal 106 attempts to enable a communications link with the second multimedia terminal 108. In the preferred embodiment, the call establishment element 216 functions to establish the first call 222 with the first multimedia terminal 106 after the two-way video gateway 100 receives an incoming call from the communications network 102 (e.g., the MSC 212) that was initiated by the first multimedia terminal 106.

At step 604, the two-way video gateway 100 establishes a second call 224 with the second multimedia terminal 108. In the preferred embodiment, the call establishment element 216 functions to establish the second call 222 with the second multimedia terminal 108. At this point, the two-way video gateway 100 only knows that the first multimedia terminal 106 and the second multimedia terminal 108 are multimedia capable. As such, the multimedia communications link 101 which includes both the first call 222 and the second call 224 has not yet been established between the first multimedia terminal 106 and the second multimedia terminal 108.

At step 606, the two-way video gateway 100 uses the first call 222 to determine the protocol and coding format capabilities of the first multimedia terminal 106. In the preferred embodiment, the connection control element 218 interacts with the first multimedia terminal 106 using the first call 222 and determines the protocol and coding format capabilities of the first multimedia terminal 106.

At step 608, the two-way video gateway 100 uses the second call 224 to determine the protocol and coding format capabilities of the second multimedia terminal 108. In the preferred embodiment, the connection control element 218 interacts with the second multimedia terminal 106 using the second call 224 and determines the protocol and coding format capabilities of the second multimedia terminal 108.

At step 610, the two-way video gateway 100 transcodes the multimedia communications 104 received in the first call 222 from the first multimedia terminal 106 that are in one protocol and coding format into another protocol and coding format which are understood by the second multimedia terminal 108. In the preferred embodiment, the signal processing element 220 uses the assigned protocol functions 402a and 402b and the assigned transcoding functions 404a, 404b, 404c, 404d and 404e to convert the multimedia communications 104 received in the first call 222 from the first multimedia terminal 106 that are in one protocol and one coding format into another protocol and coding format so that the transcoded multimedia communications 104 can be sent to and properly decoded by the second multimedia terminal 108.

At step 612, the two-way video gateway 100 forwards the transcoded multimedia communications 104 in the second call 224 to the second multimedia terminal 106. In the preferred embodiment, the call establishment element 216 forwards the transcoded multimedia communications 104 in the second call 224 to the second multimedia terminal 106.

At step 614, the two-way video gateway 100 transcodes the multimedia communications 104 received in the second call 224 from the second multimedia terminal 108 that are in one protocol and coding format into another protocol and coding format which are understood by the first multimedia terminal 106. In the preferred embodiment, the signal processing element 220 uses the assigned protocol functions 402a and 402b and the assigned transcoding functions 404a, 404b, 404c, 404d and 404e to convert the multimedia communications 104 received in the second call 224 from the second multimedia terminal 108 that are in one protocol and one coding format into another protocol and coding format so that the transcoded multimedia communications 104 can be sent to and properly decoded by the first multimedia terminal 106.

At step 616, the two-way video gateway 100 forwards the transcoded multimedia communications 104 in the first call 222 to the first multimedia terminal 106. In the preferred embodiment, the call establishment element 216 forwards the transcoded multimedia communications 104 in the first call 222 to the first multimedia terminal 106. In this way, the two-way video gateway 100 enables and establishes the multimedia communications link 101 between dissimilar multimedia terminals 106 and 108.
Following are some other advantages, features and capabilities of the present invention:
- The two-way video gateway 100 enables multimedia devices 106 and 108 to use third generation services within a second generation communications network 102.
- The two-way video gateway 100 can be connected to one or more MSCs in a wireless communications network 102b.
- The service provided by the two-way video gateway 100 to enable a multimedia communications link 101 between dissimilar multimedia terminals 106 and 108 can be offered and sold to users or subscribers.
- The service provided by the two-way video gateway 100 is easily scalable in that additional digital signal processors (e.g., signal processing elements 220) can be easily added to the two-way video gateway 100 to increase the number of possible multimedia communication links 101 between dissimilar multimedia terminals 106 and 108.
- The two-way video gateway 100 and in particular the signal processing element 220 is capable of performing a scaling conversion between the dissimilar multimedia terminals. For example, the signal processing element 220 is capable of expanding or reducing the number of picture elements sent to each endpoint (multimedia terminal) since the display size is part of the capability information exchanged between multimedia terminals.
- The two-way video gateway 100 can also enable multimedia communications 104 between multimedia terminals 106 and 108 that have different bandwidth limitations. For example, the two-way video gateway 100 can enable multimedia communications between a video conference system and a wireless video device both of which have different bandwidth limitations. The video conference system normally uses ISDN lines that operate in multiples of 64 K bits per second; typically 3 or 4 64K channels at a time. The wireless video device, on the other hand, has access to much less bandwidth and demands much greater compression of its data stream.
- The two-way video gateway is cost effective and easy to upgrade. Although several embodiments of the present invention have been illustrated in the accompanying Drawings and described in the foregoing Detailed Description, it should be understood that the invention is not limited to the embodiment disclosed, but is capable of numerous rearrangements, modifications and substitutions without departing from the spirit of the invention as set forth and defined by the following claims.

## Claims

1. A two-way video gateway, comprising:
a controller capable of enabling a multimedia communications link between dissimilar multimedia terminals by decoding multimedia communications received from one of the multimedia terminals that are in a protocol and coding format used by that multimedia terminal and reformatting the decoded multimedia communications into a protocol and coding format used by the other multimedia terminal and then forwarding the reformatted multimedia communications to the other multimedia terminal.

2. The two-way video gateway of Claim 1, wherein said controller interacts with an Internet to enable the multimedia communications link between the dissimilar multimedia terminals.

3. The two-way video gateway of Claim 1, wherein said controller interacts with a wireless communications network to enable the multimedia communications link between the dissimilar multimedia terminals.

4. The two-way video gateway of Claim 1, wherein said controller interacts with a wired communications network to enable the multimedia communications link between the dissimilar multimedia terminals.

5. The two-way video gateway of Claim 1, wherein said controller is a shared resource which enables a plurality of multimedia communications links at the same time between a plurality of dissimilar multimedia terminals.

6. The two-way video gateway of Claim 1, wherein said coding format is an audio and/or video coding format.

7. The two-way video gateway of Claim 1, wherein said one of the multimedia terminals is a handheld phone and the other multimedia terminal is a personal computer.

8. The two-way video gateway of Claim 7, wherein said handheld phone is a video mobile phone or a video land-based phone.

9. The two-way video gateway of Claim 1, wherein said one of the multimedia terminals is a handheld phone and the other multimedia terminal is video conference equipment.

10. The two-way video gateway of Claim 9, wherein said handheld phone is a video mobile phone or a video land-based phone.

11. The two-way video gateway of Claim 1, wherein said dissimilar multimedia terminals are both handheld phones.

12. The two-way video gateway of Claim 11, wherein each handheld phone can be either a video mobile phone or a video land-based phone.

13. A two-way video gateway capable of enabling a multimedia communications link between dissimilar multimedia terminals, said two-way video gateway comprising:
a call establishment element capable of establishing a first call with the first multimedia terminal after the first multimedia terminal attempts to enable a communications link with the second multimedia terminal;
said call establishment element is further capable of establishing a second call with the second multimedia terminal;
a connection control element capable of using the first call to determine the protocol and coding format capabilities of the first multimedia terminal;
said connection control element is further capable of using the second call to determine the protocol and coding format capabilities of the second multimedia terminal; and
a signal processing element capable of transcoding multimedia communications received in the first call from the first multimedia terminal that are in one protocol and coding format into another protocol and coding format so that the transcoded multimedia communications can be sent to a properly decoded by the second multimedia terminal, wherein the first call and the second call together effectively establish the multimedia communications link between the first multimedia terminal and the second multimedia terminal.

14. The two-way video gateway of Claim 13, wherein said signal processing element is further capable of transcoding multimedia communications received in the second call from the second multimedia terminal that are in one protocol and coding format into another protocol and coding format so that the transcoded multimedia communications can be sent to and properly decoded by the first multimedia terminal.

15. The two-way video gateway of Claim 13, wherein said signal processing element is further capable of performing a video scaling conversion between the dissimilar multimedia terminals.

16. The two-way video gateway of Claim 13, wherein said first multimedia terminal and said second multimedia terminal communicate with one another through said two-way video gateway and an Internet.

17. The two-way video gateway of Claim 13, wherein said first multimedia terminal and said second multimedia terminal communicate with one another through said two-way video gateway and a wireless communications network.

18. The two-way video gateway of Claim 13, wherein said first multimedia terminal and said second multimedia terminal communicate with one another through said two-way video gateway and a wired communications network.

19. The two-way video gateway of Claim 13, wherein said first multimedia terminal can be either a video mobile phone, a video land-based phone, a personal computer or video conference equipment.

20. The two-way video gateway of Claim 13, wherein said second multimedia terminal can be either a video mobile phone, a video land-based phone, a personal computer or video conference equipment.

21. The two-way video gateway of Claim 13, wherein said multimedia communications are audio and video communications.

22. A method for enabling a multimedia communications link between a first multimedia terminal and a second multimedia terminal, said method comprising the steps of:
establishing a first call with the first multimedia terminal after the first multimedia terminal attempts to enable a communications link with the second multimedia terminal;
establishing a second call with the second multimedia terminal;
using the first call to determine the protocol and coding format capabilities of the first multimedia terminal;
using the second call to determine the protocol and coding format capabilities of the second multimedia terminal;
transcoding multimedia communications received in the first call from the first multimedia terminal that are in one protocol and coding format into another protocol and coding format which are understood by the second multimedia terminal; and
forwarding the transcoded multimedia communications in the second call to the second multimedia terminal.

23. The method of Claim 22, further comprising the steps of:
transcoding multimedia communications received in the second call from the second multimedia terminal that are in one protocol and coding format into another protocol and coding format which are understood by the first multimedia terminal; and
forwarding the transcoded multimedia communications in the first call to the first multimedia terminal.

24. The method of Claim 22, wherein said first multimedia terminal and said second multimedia terminal communicate with one another through a two-way video gateway and an Internet.

25. The method of Claim 22, wherein said first multimedia terminal and said second multimedia terminal communicate with one another through a two-way video gateway and a wireless communications network.

26. The method of Claim 22, wherein said first multimedia terminal and said second multimedia terminal communicate with one another through a two-way video gateway and a wired communications network.

27. The method of Claim 22, wherein said first multimedia terminal can be either a video mobile phone, a video land-based phone, a personal computer or video conference equipment.

28. The method of Claim 22, wherein said second multimedia terminal can be either a video mobile phone, a video land-based phone, a personal computer or video conference equipment.

29. The method of Claim 22, wherein said coding format is an audio and/or video coding format.

30. The method of Claim 22, wherein said multimedia communications are audio and video communications.

31. The method of Claim 30, wherein said video communications can undergo a scaling conversion between the dissimilar multimedia terminals.

32. A communications network, comprising:
a two-way video gateway including a controller capable of enabling a multimedia communications link between dissimilar multimedia terminals by decoding multimedia communications received from one of the multimedia terminals that are in a protocol and coding format used by that multimedia terminal and reformatting the decoded multimedia communications into a protocol and coding format used by the other multimedia terminal and then forwarding the reformatted multimedia communications to the other multimedia terminal, wherein said dissimilar multimedia terminals can transmit and receive multimedia communications to and from one another while each multimedia terminal is able to operate in a protocol and coding format optimized for their individual capabilities without taking into account the protocol and coding format used by the other multimedia terminal.

33. The communications network of Claim 32, wherein said communications network is an Internet.

34. The communications network of Claim 32, wherein said communications network is a wireless communications network.

35. The communications network of Claim 32, wherein said communications network is a wired communications network.
